# EUROPEAN PATENT APPLICATION

(11) **EP 4 331 818 A1**
(43) Date of publication of application: **06.03.2024**
(21) Application number: 22193516.6
(22) Date of filing: 01.09.2022
(51) Int. Cl.: B29C 70/38, B29C 70/54, B29D 99/00, G06F 30/27, B29L 31/08, G06F 113/06

(54) **LASER PROJECTOR ASSEMBLY**

(71) Applicant: Siemens Gamesa Renewable Energy A/S, 7330 Brande (DK)
(72) Inventor: Anes, Francis Jason, 403005 Ilhas Goa (IN); Chomal, Ayush, 302020 Rajasthan (IN); Agrawal, Anuj, 560029 Bangalore, Karnataka (IN)
(74) Representative: SGRE-Association

(57) **Abstract**

The invention describes a laser projector assembly (1) for use in a wind turbine rotor blade manufacturing facility (3), comprising a number of laser projector units (10), wherein each laser projector unit (10) comprises a positioning means (13) for positioning the laser projector unit (10) above a selected rotor blade mould (2), and a laser projector (12) configured to project layup guides (12G) into that mould (2) during a manual layup procedure; an imaging arrangement (11) adapted to capture images (110) of that mould (2); a machine learning algorithm (18) trained to determine coordinates of a feature (2M, 12P) in an image (110); and a calibration module (16) configured to calibrate a laser projector (12) to that mould (2) prior to the manual layup procedure on the basis of an output (180) of the machine learning algorithm (18). The invention further describes a method of manufacturing a wind turbine rotor blade (4) using such a laser projector assembly (1), a machine-learning algorithm (18) for use in such a laser projector assembly (1), and a method of training such a machine-learning algorithm.

## Description

### Background

A wind turbine rotor blade can be manufactured by arranging pieces of a composite material (usually glass-fibre material) into a mould along with structural elements such as a spar and spar caps, and then closing the mould. Resin is infused into the closed mould using a system of inlets, outlets and vacuum pumps to distribute a fluid resin evenly throughout the composite material layers. The resin is then allowed to cure, a process which can be accelerated by heating elements embedded in the mould body. Finally, the mould is opened to release the cured rotor blade or rotor blade shell.

During the layup procedure, the composite material pieces can be arranged in a mould according to a pre-defined layup plan, which specifies which type of composite material, the size of the piece, and the position of the piece in the mould. In the case of long rotor blades (e.g. with a length of 80 m or more), it is generally not practicable to perform layup in an entirely manual procedure, particularly in a manufacturing facility that produces rotor blades in large quantities.

It is known to deploy a laser projector assembly to assist the layup procedure. For example, a fixed laser projector assembly comprises multiple laser projectors installed above a mould in a manufacturing facility, and may require one laser projector every 6 - 8 m. Each laser projector is assigned to a mould section, and is used to project an outline of a composite piece into the mould, showing the intended position of the composite piece within that mould section. A technician, following the layup plan for that mould, can then place the composite pieces at the correct positions.

This type of laser projector assembly must be carefully calibrated to that rotor blade mould in order to ensure that the projected outlines correspond exactly to the positions of the composite material pieces. This requirement can in turn lead to additional cost overhead for several reasons. For example, the laser projector assembly can only be used with the mould for which it was specifically calibrated. A manufacturing facility that produces multiple rotor blade series would require a dedicated projector assembly for each series, since the various dimensions of the moulds will differ. A fixed laser projector assembly for each of multiple moulds is very expensive and contributes significantly to the cost of rotor blade manufacture.

Furthermore, since a mould presently used in large-scale manufacture of wind turbine rotor blades is also generally made of a composite material such as fibreglass, the mould itself can shrink progressively during its lifetime. The final or ultimate length of a "used" mould can be noticeably shorter than its initial length. Therefore, when using a prior art laser projector assembly, a layup procedure is generally preceded by a labour-intensive manual calibration to adjust the laser projectors as necessary. These measurement and calibration steps can be time-consuming and require highly precise measurement procedures in order to avoid layup errors. The known approach therefore contributes significantly to the overall cost of manufacture of a rotor blade.

It is therefore an object of the invention to provide an improved laser projector assembly that overcomes the problems outlined above.

This object is achieved by the claimed laser projector assembly; by the claimed method of manufacturing a wind turbine rotor blade; and by the claimed machine learning algorithm.

### Description

The rotor blades of present-day wind turbines can have a length in the order of 80 m - 100 m or even more. In the following, it may be assumed that the mould is used in the manufacture of such a long rotor blade. A laser projector is used to project an outline into the mould during the manual layup procedure, showing the position, size and shape of the composite piece to be placed, and the projected outline may be referred to herein as a layup guide, outline guide, guiding outline, etc.

The laser projector assembly described in the following shall be understood to be intended for use in a manufacturing facility for the series production of wind turbine rotor blades. The manufacturing facility may comprise a hall or factory large enough to accommodate multiple rotor blade moulds and other equipment required for simultaneously carrying out at least layup, vacuum-assisted resin transfer, curing and de-moulding stages. In the context of the invention, the expression "selected mould" can be understood to be the "lower half" or "lower shell" of a mould used in a closed-mould manufacturing technique. The entire rotor blade layup is placed in this lower shell prior to closing the mould, as explained in the introduction. Equally, the "selected mould" can be one of two moulds used in a "butterfly" moulding technique in which each rotor blade half is cast separately and the cured halves are bonded along their outer perimeters.

According to the invention, a laser projector assembly comprises a number of laser projector units and a positioning means for moving a laser projector unit into position over a selected mould. A laser projector unit comprises a laser projector configured to project layup guides into the selected mould during a manual layup procedure. The laser projector assembly also comprises an imaging arrangement with a number of cameras arranged to capture images of the selected mould. The laser projector assembly further includes a module with machine learning algorithm that has been trained to determine coordinates of a feature in an image, and a calibration module adapted to calibrate a laser projector unit to that selected mould prior to the manual layup procedure on the basis of an output of the machine learning algorithm.

An advantage of the inventive laser projector assembly is that each laser projector unit can be operated essentially independently of any other laser projector unit. A laser projector unit that is no longer required for the layup in one mould can be moved on to the next mould. A further advantage is that the laser projector of a laser projector unit can be calibrated quickly and highly accurately within a very short time, for example in the space of only a few seconds, so that the lead time preceding the layup procedure can be kept to a very favourable minimum. Furthermore, calibration of a laser projector does not require any manual input such as measurements obtained by personnel or technicians, with advantageous savings in labour costs. Since the laser projector assembly performs this calibration procedure essentially autonomously as will be explained below, the procedure may be referred to herein as "auto-calibration".

According to the invention, the method of manufacturing a wind turbine rotor blade using an instance of the inventive laser projector assembly comprises initial steps of moving a laser projector unit into position above a selected mould (i.e. into a position for projecting guide outlines for the next stage of a layup); operating the imaging arrangement to capture images of the selected mould; and applying the calibration unit to calibrate that laser projector unit to the selected mould in preparation for the layup stage. In a subsequent stage, the method comprises steps of operating the calibrated laser projector unit to project layup guides into the selected mould to assist the manual layup procedure.

According to the invention, the trained machine-learning algorithm for use in such a laser projector assembly comprises a machine learning module comprising an input layer, an output layer and a number of intermediate layers. The input layer is configured to receive images of the mould that include target markers and laser calibration patterns as will be explained below. The output layer is configured to output the coordinates of the target markers and calibration patterns. This information is then used to make any necessary adjustments to the layup plan so that the laser projector will cast correct guide outlines into that mould.

The expressions "machine learning", "artificial intelligence" and "AI" shall be understood to be synonyms and may be used interchangeably herein. In a preferred embodiment of the invention, the machine learning module can be a neural network module. Any suitable neural network may be trained and deployed in the inventive laser projection assembly. In the following, without restricting the invention in any way, it may be assumed that the machine learning comprises a neural network such as a convolutional neural network.

A laser projector can project a beam of light precisely at an intended point. As will be known to the skilled person, a laser projector can be used to project a 2D image by providing it with the image parameters and controlling a servo system of the scanner so that a mirror, mounted at the end of a rotary shaft, directs the laser beam to "draw" the image. Because of the high scanning speed, the viewer perceives a complete image, in this case, an outline of a composite material piece. For example, image parameters can be the dimensions of a rectangular mat or sheet of fibreglass material, and the laser projector is used to project a corresponding rectangular outline into the mould. When working on the "bottom half" of the layup for a closed-mould technique, the outlines are projected into the concave lower shell. After placement of the web, spar caps and mandrels, work proceeds on the "top half" of the layup, and the outlines are projected onto the upper layup. After completion of the layup, the mould is closed and resin infusion can be performed.

Particularly advantageous embodiments and features of the invention are given by the dependent claims, as revealed in the following description. Features of different claim categories may be combined as appropriate to give further embodiments not described herein.

The imaging arrangement of a laser projector unit can be configured so that the camera captures a single image showing the entire mould. Alternatively, several images can be captured, each showing part of the mould, and the imaging arrangement can comprise an image-stitching module that generates a composite image of the entire mould.

As explained above, the length of a fibreglass rotor blade mould shrinks during its lifetime. In the inventive approach, the AI algorithm enables the layup plan to be adjusted very accurately to correspond to the actual mould size, thereby correcting to allow for any length difference in the spanwise direction between the assumed mould length and the actual mould length. As used in the context of the invention, the expression "calibrating a laser projector unit to a mould" is to be understood in the accepted sense to mean adjusting the layup plan to correct for a discrepancy between the assumed mould length and the actual mould length.

In a particularly preferred embodiment of the invention, multiple target markers are arranged on the mould such that these are visible to the imaging arrangement. A target marker shall be understood to be clearly visible to the image sensor. For example, a target marker can have a clearly visible shape and/or may show a clearly discernible pattern. The target markers are preferably arranged at an upper face of the mould, for example on a flange about the mould perimeter. The expression "upper face" shall be understood as the upward-facing horizontal surface extending about the perimeter of the mould.

The target markers are used during a training procedure and also during a subsequent calibration procedure and should be clearly discernible to an image processing algorithm. In a favourably simple approach, the target markers can be stickers placed in a predetermined arrangement onto the upper face of the mould with a colour and/or pattern that clearly distinguishes them optically from the mould. In such an approach, the target markers can be placed manually, for example spaced at pre-defined spanwise intervals along the upper face. In a preferred embodiment of the invention, bushings already present about the perimeter of a lower shell may be used as target markers. These bushings receive fasteners that are used to join the upper shell to the lower shell prior to a closed-mould resin infusion stage. To make the bushings clearly discernible (to the image processing algorithm) as target markers, in a preferred embodiment of the invention the inside surface of the bushings can be coated with a suitable material such as reflective white paint.

Although the target markers are provided on the mould, they may be regarded as part of the laser projector assembly since the only purpose of the target markers is to assist the machine learning algorithm in calibrating the laser projector unit to the selected mould. An image of the mould can include one or more clearly discernible target markers along the perimeter, for example markers placed at 10 m intervals on a new mould, and the trained machine learning algorithm can infer the actual coordinates of the markers in a reference frame of that mould. As explained above, the length of a fibreglass mould can shrink perceptibly during its lifetime. In the inventive laser projector assembly, the machine learning algorithm is configured to ascertain the actual coordinates of any target markers in an image. In this way, a controller of the laser projector unit can establish its spanwise position relative to the mould. For example, markers originally placed at 10 m intervals in the spanwise direction on a new mould may ultimately be separated by 9.95 m when the mould has reached its final length. This discrepancy can be detected by controlling the laser projector to project a laser calibration pattern at the assumed coordinates of a target marker, and detecting any spanwise offset between the target marker and the calibration pattern in an image.

Particularly in the case of series production of wind turbine rotor blades, the layup procedure can be simplified by compiling a layup plan for a specific mould type. Such a layup plan can specify the order of placement of a plurality of composite material pieces, between the large circular root end and the outermost tip end. A layup plan may specify the size and shape of each composite material piece. A layup plan may also specify the type of each composite material piece, for example a CSM (chopped strand mat), a roving, a unidirectional weave, etc. The layup plan can also specify the intended position of a structural component (for example a spar cap, a shear web, etc.) so that a corresponding guide outline can be cast into the mould to assist the layup team in placing that component. Most relevant to the invention is that the layup plan also specifies the position of each composite material piece in the mould, and each such position is specified on the basis of an assumed and possibly incorrect mould length. This is because the layup plan is compiled under the assumption that the mould has a certain length, referred to herein as the "assumed mould length".

In a particularly preferred embodiment of the invention, the laser projector assembly is configured to receive such a layup plan tailored to the selected mould and the inventive machine learning algorithm is trained to determine any necessary correction that may need to be made to the layup plan so that the layup matches the selected mould.

A rotor blade mould is prepared by placing target markers at certain positions along the mould perimeter, or coating already existing bushings with a reflective paint as described above. A laser projector unit is positioned above the mould, the laser projector is actuated to project a laser calibration pattern onto the mould, and the imaging arrangement is actuated to capture a set of images of the mould (a single image of the complete mould or a composite image obtained by image stitching). A set of images for that mould is referred to herein as an image batch. A training procedure for the machine-learning algorithm comprises the steps of obtaining an image batch for a rotor blade mould and annotating the target markers and calibration patterns visible in the images. The images are also annotated with the coordinates of the target markers and calibration patterns (in a pre-defined frame of reference for the mould). The actual length of the mould is measured and presented as a ground truth to the machine-learning algorithm. With these ground truths as input, the neural network learns to identify the target markers and calibration patterns in the images, and to deduce their coordinates. This supervised learning stage is repeated for multiple image batches until the accuracy of the neural network is satisfactory. The trained neural network can then receive an image batch as input, and will output the coordinates of any visible target markers and calibration patterns. A training dataset for the machine learning algorithm can comprise several thousand annotated image batches for any one type rotor blade mould, depending on the required/desired accuracy of the calibration (accuracy can be increased by using more images to train the algorithm).

The trained neural network can then be used to calibrate a laser projector unit to a selected mould once the laser projector unit has been moved into position over that mould. In a first step, one or more cameras of the laser projector assembly are operated to capture images of the mould, while the laser projector is controlled to project a calibration pattern at a specific point, for example onto the expected position of a target marker. The neural network processes the images and outputs the coordinates of that target marker and the laser calibration pattern. Any discrepancy between the expected laser position and its actual position (e.g. it may be "off" by a few millimetres or even centimetres in the spanwise direction) is then used to calibrate a laser projector unit to that mould, by correcting the entries in the layup plan by the corresponding factor.

The calibration procedure takes into account any discrepancy between the "actual" mould length and the assumed mould length upon which the layup plan is based. For example, as explained above, the actual length of a new or relatively new mould may be slightly longer than the assumed mould length. If the layup plan is based on an incorrect assumed mould length, following this layup plan without any corrective adjustment would have the result that the completed layup would fall short of the tip in that selected mould. In this case, calibration of the laser projector assembly to that mould by correction of the layup plan will ensure that each outline guide is "scaled up", i.e. corrected to adjust for the "excess" mould length. In a further example, the actual length of an older mould may be significantly shorter than the assumed mould length. If the layup plan were to be followed without any corrective adjustment, the completed layup would fall short of the tip of the selected mould. In this case, calibration of the laser projector assembly to that mould by correction of the layup plan will ensure that the length of each outline guide is "scaled up", i.e. corrected to adjust for the "shortfall" in mould length.

A laser projector assembly can be realized in any suitable manner in the manufacturing facility. For example, any cameras of the imaging arrangement can be wall-mounted, track-mounted or suspended from a cable arrangement. A camera can be fixed, i.e. its position remains unchanged, or moveable so that a camera can be moved into position as required.

Equally, a laser projector unit can be wall-mounted, track-mounted, etc. In a particularly preferred embodiment of the invention, a laser projector unit is configured to move along a track mounted to a ceiling of the manufacturing facility. A row of rotor blade moulds may be arranged underneath the track, for example in a configuration in which the long axes of the rotor blades are aligned with the track. The positioning means of each laser projector unit preferably comprises a suitable motor-driven actuator adapted to move the laser projector unit along the track. The actuator can be controlled in an entirely automated manner. For example, following a layup plan, the positioning means can move a laser projector unit further along in the direction of the tip end, so that the next section of the layup can be carried out.

In the case of a long rotor blade, several workers may perform the manual layup, and a laser projector unit can be deployed to assist a team composed of one or more workers. For example, over a relatively short or narrow section of the mould, one laser projector may be deployed to assist the layup team working on that section. For a relatively long or wide section, more than one laser projector may be deployed to assist the layup team. As the layup nears completion, any "free" laser projector unit can move or be moved into position over another scheduled mould. In this way, a plurality of laser projector units can be optimally exploited, while keeping the total number of laser projector units to a favourable minimum. The total number of laser projector units can depend on the number of workers or teams, since the purpose of the laser projector units is to assist workers in performing manual layup. In a particularly preferred embodiment of the inventive method, the number of laser projector units deployed at any one time corresponds to number of teams working on the layup procedure. For example, a single laser projector unit can be deployed to assist a single team working on the layup procedure; three laser projector units can be deployed when three layup teams are simultaneously working on different sections of the mould.

The inventive laser projector assembly advantageously allows a seamless "handover" from one laser projector unit to another. For example, if three laser projector units have been used to assist the layup teams and the middle unit is no longer required, one of the outer laser projector units can "hand over" to the middle laser projector unit and then move on to the next mould, where a calibration procedure as described above is carried out in preparation for the layup in that next mould.

As explained in the introduction, a prior art laser projector setup may require a fixed arrangement with laser projectors for specific sections of a lower mould, each set up to project outline guides into the corresponding lower mould section. The projectors are calibrated for that specific lower mould until it has reached the end of its lifetime. The fixed laser projector setup remains idle during the resin infusion and curing steps, and cannot be used until the mould is opened and the cured rotor blade is removed from the lower shell. In contrast, the laser projector units of the inventive laser projector assembly can be used essentially continuously, since each laser projector unit can be moved into a new position over any rotor blade mould underneath the track. Since the laser projector units are independently moveable, fewer units are required for the task of projecting outline guides into a selected mould.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a plurality of moulds arranged in a wind turbine rotor blade manufacturing facility;
Figures 2 and 3 illustrate a calibration procedure;
Figure 4 illustrates post-casting shrinkage of a rotor blade mould;
Figure 5 illustrates post-curing shrinkage of a cured rotor blade;
Figure 6 illustrates a training procedure for the inventive machine learning algorithm;
Figure 7 illustrates a stage in a training or calibration procedure;
Figure 8 shows a prior art rotor blade manufacturing facility.

In the diagrams, like numbers refer to like objects throughout. Objects in the diagrams are not necessarily drawn to scale.

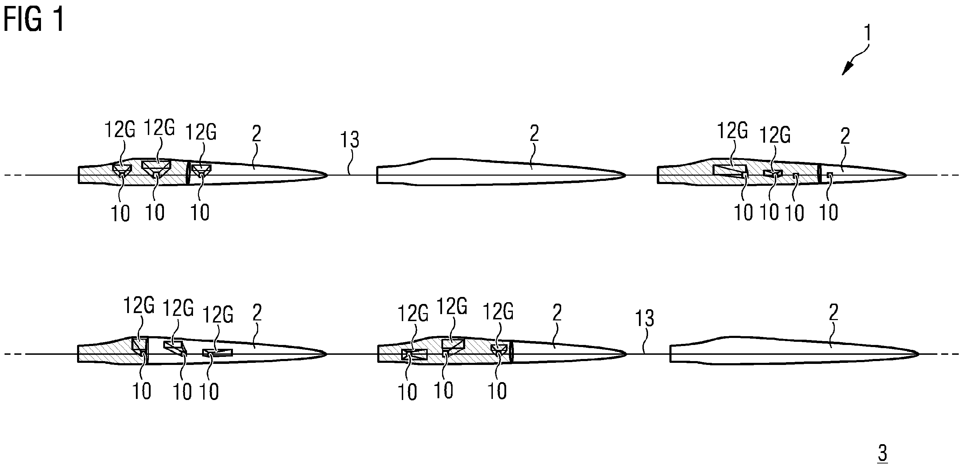

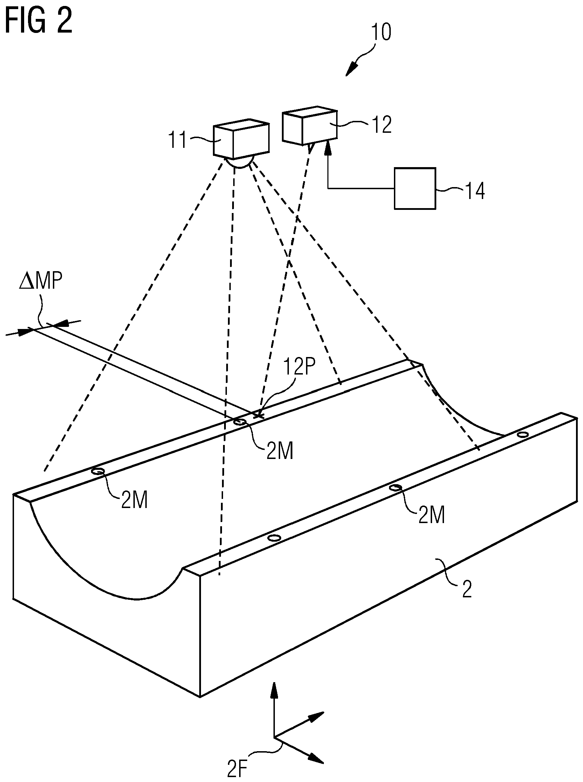

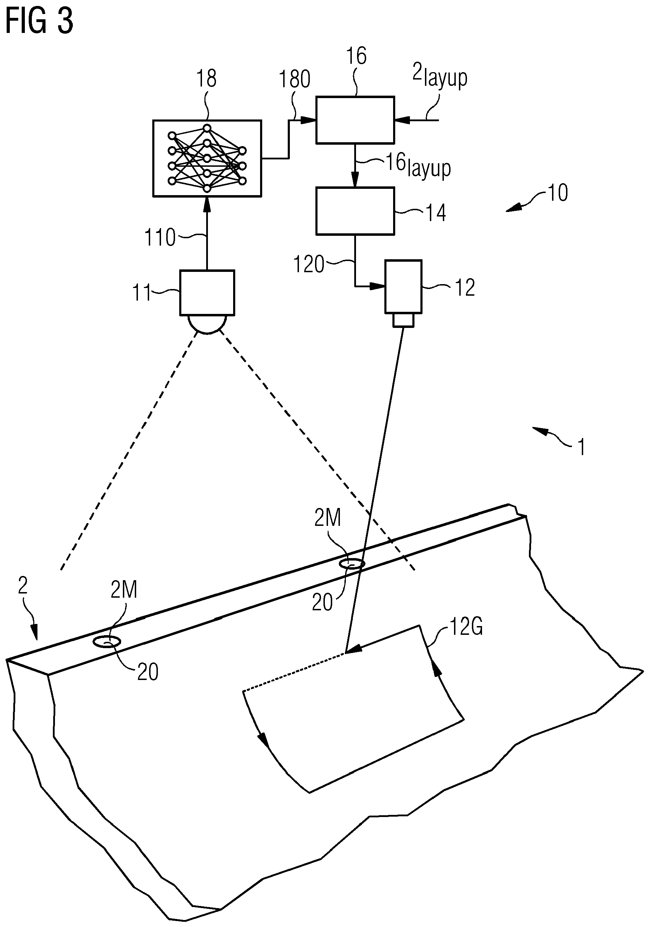

Figures 1 to 3 illustrate exemplary aspects of the inventive laser projector assembly 1. Figure 1 shows a plurality of moulds 2 arranged in a wind turbine rotor blade manufacturing facility 3, while Figure 2 and Figure 3 show a laser projector unit 10 in place above a selected mould 2.

In Figure 1, a manual layup is shown (by the hatched regions) in various stages of completion in some of the moulds 2, while other moulds 2 are still empty. The laser projector assembly 1 includes several laser projector units 10 movably mounted on a track 13. The track 13 can be mounted on or suspended from a ceiling of the manufacturing facility, for example. Here, two tracks 13 are provided, each carrying several laser projector units 10, and a row of moulds 2 is arranged underneath each track 13. Each laser projector unit 10 comprises a laser projector 12 and a controller 14 as shown in Figure 2. A suitable positioning means for moving a laser projector unit 10 into position can be actuated by the controller, for example. Figure 2 also indicates a camera of the imaging arrangement 11, which may be ceiling-mounted, suspended from a cable arrangement, or otherwise positioned above the mould 2. Here, the camera 11 is actuated to capture an image 110 of the mould 2 as indicated by the dotted lines. The image (which can be a single image or a stitched composite image) also shows an arrangement of target markers 2M provided about the perimeter of the mould 2. In this exemplary embodiment, a target marker 2M is formed as a reflective coating in a bushing 20 that will be used later to connect an upper shell to the lower shell 2.

The laser projector unit 10 is also configured to receive a layup plan 2_{layup} specifying the order of placement of composite material pieces in that mould 2. As explained above, the laser projector 12 is used during a subsequent manual layup procedure to project outline guides 12G (an exemplary guide 12G is shown) for each composite material piece into the lower mould 2 according to the layup plan, which can be provided in a suitable data format as will be known to the skilled person.

The laser projector assembly 1 includes a trained neural network 18 in this exemplary embodiment. This receives images 110 from one or more cameras (only one is shown here for the sake of simplicity) of the imaging arrangement 11, identifies any target markers 2M and calibration patterns 12P in the images, and determines the coordinates, in a reference frame 2F for the mould, for any such features 2M, 12P. In an initial calibration step, the laser projector 12 is controlled to project a calibration pattern 12P at a certain position on the mould 2 (for example onto a specific target marker 2M), and at the same time the imaging arrangement 11 is controlled to capture images 110 showing the calibration pattern 12P. The images 110 - which will include a section of the mould 2, some target markers 200 and any calibration pattern 12P - are fed into the neural network 18. The neural network 18 can have been trained to output the coordinates of any target markers 2M and calibration patterns 12P seen in the images in the reference frame 2F for that mould 2. The controller 14 can then determine any spanwise discrepancy ΔMP between the projection coordinates of a calibration pattern and the actual coordinates of the pattern 12P as it appears on the mould 2. If the actual length L₂ of the mould 2 does not match the assumed mould length, the calibration pattern 12P will be offset in the spanwise direction from its intended position. Detection of a discrepancy ΔMP may depend on a previously determined tolerance, for example the calibration pattern 12P and target marker 2M may be considered to coincide if the calibration pattern 12P is offset by less than 5 mm from the target marker 2M.

To conclude the auto-calibration step, a calibration module 16 adjusts the entries of the layup plan 2_{layup} by an appropriate factor on the basis of the output 180 of the neural network 18. For example, a detected discrepancy ΔMP may indicate that the spanwise length of each composite piece should be shortened by 0.1%, and the calibration module responds by adjusting each entry of the layup plan accordingly. Similarly, the spanwise position of any structural element such as a spar cap can also be corrected by the appropriate amount. The adjusted layup data 16_{layup} is then used to control the laser projector 12, which proceeds to project highly accurate layup guides to assist the layup team(s).

Once the laser projector unit 10 has completed the calibration sequence, the manual layup procedure can commence as indicated in Figure 3, and the laser projector 12 is used to "draw" outline guides 12G in the mould 2 according to the layup plan. A layup scheduler or controller 14 can execute the (adjusted) layup plan 16_{layup} by controlling the laser projector 12 to project an outline guide 12G for each of a sequence of composite material pieces that are to be laid into that section of the mould 2, for example control signals 120 are issued to the laser projector 12 on the basis of the corrected layup data 16_{layup} as shown here.

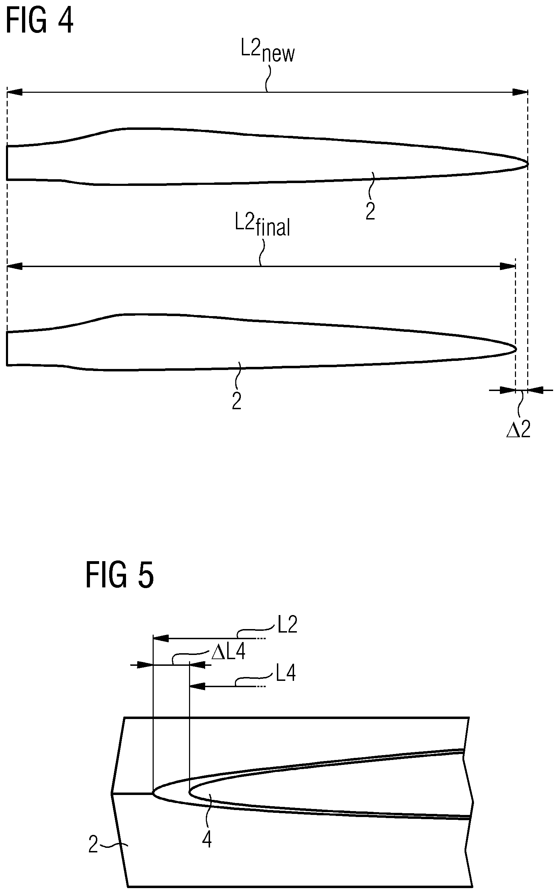

Figure 4 shows a mould 2 indicating its initial length L2_{new} and its final length L2_{final} and the difference Δ2 between these "new" and "final" lengths. For example, a newly-manufactured fibreglass mould 2 for a 100 m rotor blade may have a length of 100.5 m (the additional 50 cm are intended to account for shrinkage of the rotor blade during curing). After being used to mould and cure many rotor blades, the mould length L2_{final} may reduce to 100.3 m. Until the mould has completed its shrinking process, the actual mould length can be anywhere between the original length L2_{new} and the final length L2_{final}.

Figure 5 shows a simplified partial cross-section through a cured rotor blade 4. The length L4 of the rotor blade 4 is slightly less than the actual length L2 of the mould 2, indicated by the difference ΔL4. However, the layup plan for that mould 2 may be based on the length L4 of the cured rotor blade 4 or on an incorrect mould length assumption. The calibration performed by the inventive laser projector unit 10 "scales" the layup plan 2_{layup} according to the actual mould length L2 immediately prior to each layup procedure, thereby avoiding layup errors that would otherwise arise from incorrect mould length assumptions.

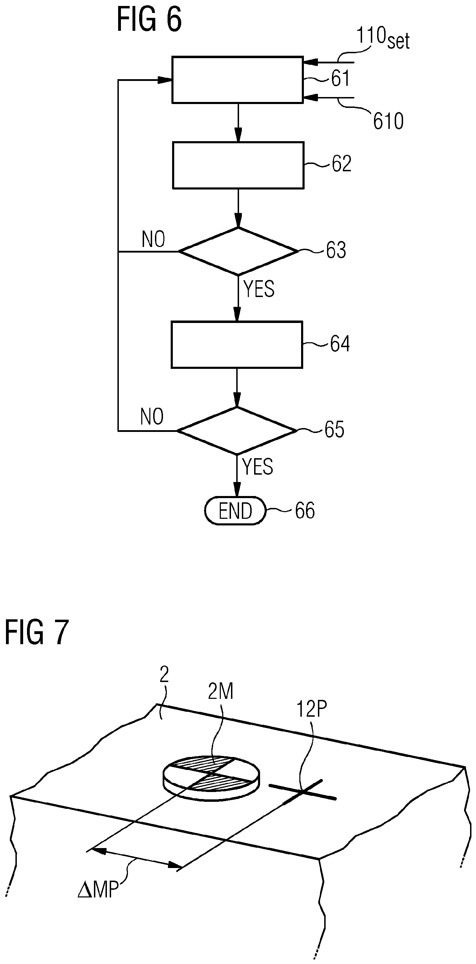

Figure 6 is a flowchart to illustrate a training procedure of the neural network. An image batch 110ₛₑₜ for a mould is obtained in stage 61 and input to the neural network. As explained above, the images of a batch 110ₛₑₜ will show sections of the mould, including the mould perimeter, target markers 2M and calibration patterns 12P. The images of each batch 110ₛₑₜ are annotated to identify target markers 2M and calibration patterns 12P and to include the coordinates of each target marker 2M and calibration pattern 12P. For each image batch 110ₛₑₜ, further relevant ground truths 610 such as the end-to-end length of the corresponding mould 2 are also input to the neural network.

In stage 62, the neural network learns to distinguish a target marker 2M and a calibration pattern 12P in the images of a batch 110ₛₑₜ. These stages 61, 62 are repeated many times until the neural network can reliably distinguish target markers 2M and calibration patterns 12P in the images, regardless of whether these are separately visible or whether a calibration pattern is overlaid on a target marker. The decision to continue ("no") or conclude ("yes") this learning stage is made in step 63.

When the neural network has learned to recognise target markers and calibration patterns with a high degree of accuracy, training can proceed with the next stage 64 in which the neural network learns to determine the coordinates of a target marker 2M or calibration pattern 12P in the mould's frame of reference. The coordinates of the target markers 2M on the perimeter of the mould are known as a ground truth, and the neural network learns to deduce the coordinates of any target marker 2M visible in an image. Similarly, the neural network learns to deduce the coordinates of any calibration pattern 12P visible in an image. The decision to continue ("no") or conclude ("yes") this learning stage is made in step 65.

When the neural network has learned to deduce the coordinates of target markers and calibration patterns with a high degree of accuracy, training can conclude at step 66. The neural network can now be used by a laser projector unit to determine its position relative to a mould and to calibrate that laser projector unit to that mould.

Figure 7 illustrates a stage in a training or calibration procedure, and shows how a target marker 2M and laser calibration pattern 12P may appear in images of the rotor blade mould 2. Here, a target marker 2M has a distinct pattern. If the mould size has remained unchanged over its lifetime, the laser calibration pattern 12P would align with the marker 2M. However, owing to unavoidable span-wise shrinkage, the laser calibration pattern 12P may be offset to some extent from the marker 2M. Any such offset ΔMP is detected during calibration and the layup plan can be adjusted accordingly as explained above.

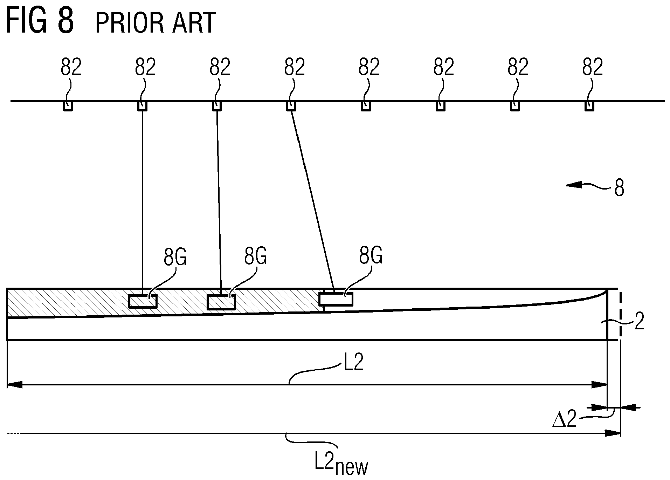

Figure 8 illustrates a problem known from the prior art. The diagram shows a fixed laser assembly 8 in place over a rotor blade mould 2. The laser assembly 8 comprises several laser projectors 82. Each laser projector 82 is assigned to a section of the mould 2 and projects the outline 8G of a composite piece into the mould 2, with the intention of indicating the correct position to a technician. However, because of post-casting mould shrinkage from an initial length L2_{new} to the actual length L2 with ensuing difference Δ2, a projected outline would not correspond exactly to the optimal position of that composite piece. Without correction, layup errors would accumulate. To avoid such problems, the prior art approach requires careful manual measurement of the mould prior to each layup stage, and meticulous recalibration of the laser projectors. The conflicting requirements of having to "scale down" to account for thermal shrinkage of the mould and also having to "scale up" to account for shrinkage of the composite layup during curing can make it very time-consuming to correctly set up the laser projector prior to the manual layup procedure, adding to the cost of manufacture. An initial calibration procedure following installation of a new fixed laser assembly as known from the prior art can take up to six hours, and each subsequent calibration prior to moulding a new rotor blade can take up to an hour. Furthermore, the known laser projector assembly requires many laser projectors, for example one for each 7 m of mould length. However, as shown here, only some are required at any one time, while others are no longer required (the laser projector on the left) or not yet required (the three on the right), i.e. the costly equipment is not optimally exploited.

Although the present invention has been disclosed in the form of preferred embodiments and variations thereon, it will be understood that numerous additional modifications and variations could be made thereto without departing from the scope of the invention. For example, the inventive laser projector assembly and manufacturing method could be used in the manufacture of any large composite part that benefits from laser guidance during a layup procedure. Such parts can be large structural elements for embedding in a rotor blade, for example a spar cap. Of course, the inventive laser projector assembly and manufacturing method can be adapted for use in the manufacture of large composite objects other than wind turbine rotor blades.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A laser projector assembly (1) for use in a wind turbine rotor blade manufacturing facility (3), comprising
- a number of laser projector units (10), wherein each laser projector unit (10) comprises a positioning means (13) for positioning the laser projector unit (10) above a selected rotor blade mould (2), and a laser projector (12) configured to project layup guides (12G) into that mould (2) during a manual layup procedure;
- an imaging arrangement (11) adapted to capture images (110) of that mould (2);
- a machine learning algorithm (18) trained to determine coordinates of a feature (2M, 12P) in an image (110); and
- a calibration module (16) configured to calibrate a laser projector (12) to that mould (2) prior to the manual layup procedure on the basis of an output (180) of the machine learning algorithm (18).

2. A laser projector assembly according to the preceding claim, wherein the machine learning algorithm (18) is a convolutional neural network.

3. A laser projector assembly according to any of the preceding claims, wherein the output (180) of the machine learning algorithm (18) is the spanwise distance (ΔMP) between a target marker (2M) and a laser calibration pattern (12P) .

4. A laser projector assembly according to any of the preceding claims, comprising a plurality of target markers (2M) provided at predetermined coordinates about the perimeter of a rotor blade mould (2).

5. A laser projector assembly according to any of the preceding claims, wherein a target marker (2M) comprises a reflective coating on the interior surface of a mould bushing (20) .

6. A laser projector assembly according to any of the preceding claims, configured to receive a layup plan (2_{layup}) for the selected mould (2).

7. A laser projector assembly according to the preceding claim, wherein the layup plan (2_{layup}) of a selected mould (2) determines the order of placement of a plurality of composite material pieces in that mould and/or the shape of each composite material piece and/or the type of each composite material piece and/or the position of each composite material piece in that mould.

8. A laser projector assembly according to claim 6 or claim 7, wherein the calibration module (16) is configured to adjust entries of the layup plan (2_{layup})on the basis of a spanwise offset (ΔMP) between a target marker (2M) and a calibration pattern (12P).

9. A laser projector assembly according to any of the preceding claims, wherein the imaging arrangement (11) comprises a plurality of cameras arranged above a mould (2).

10. A method of manufacturing a wind turbine rotor blade (4) using the laser projector assembly (1) according to any of claims 1 to 9, comprising the steps of
- moving a laser projector unit (10) into position above a selected mould (2); and, prior to a manual layup procedure,
- operating the imaging arrangement (11) of that laser projector assembly (1) to capture images (110) of the selected mould (2); and
- applying the machine learning algorithm (18) to the images (110);
- calibrating that laser projector unit (10) to that mould (2) on the basis of the machine learning algorithm output (180); and subsequently
- operating the laser projector (12) of the calibrated laser projector unit (10) to project layup guides (12G) into the selected mould (2).

11. A method according to the preceding claim, wherein the machine learning algorithm (18) determines the coordinates of target markers (2M) and laser calibration patterns (12P) shown in the captured images (110).

12. A method according to claim 10 or claim 11, comprising a step of receiving a layup plan (2_{layup}) for the selected mould (2), and wherein the step of calibrating a laser projector unit (10) comprises adjusting the layup plan (2_{layup}) on the basis of an output (180) of the machine learning algorithm (18) .

13. A machine-learning algorithm (18) for use in a laser projector assembly (1) according to any of claims 1 to 9, comprising
- a neural network comprising an input layer, an output layer and a number of intermediate layers, wherein
- the input layer is configured to receive annotated images (110_{label}) of a mould (2) in which target markers (2M) and laser calibration patterns (12P) have been labelled; and
- the output layer is configured to provide coordinates of target markers (2M) and laser calibration patterns (2P) in a reference frame of that mould (2).

14. A method of training the machine-learning algorithm of claim 13, comprising the steps of
S0) arranging a laser projector unit (10) above a rotor blade mould (2);
S1) obtaining a set of images (110) of the mould (2);
S2) annotating the images (110) by labelling target markers (2M) and laser calibration patters (12P) and specifying the coordinates of those target markers (2M) and laser calibration patters (12P) in a reference frame of that mould (2);
S3) repeating steps S1 and S2 in a supervised learning procedure to deduce the coordinates of target markers (2M) and laser calibration patters (12P) from an image (110) of a mould (2).

15. A method according to claim 14, wherein a training dataset comprises at least 2,000 rotor blade mould image sets (110ₛₑₜ).
